Europäisches Patentamt

European Patent Office

Office européen des brevets

(19)

(11) Publication number: **0 255 966 B1**

(12) **EUROPEAN PATENT SPECIFICATION**

(45) Date of publication of patent specification: **29.01.92**    (51) Int. Cl.⁵: **A21D  2/16**

(21) Application number: **87201358.6**

(22) Date of filing: **15.07.87**

The file contains technical information submitted after the application was filed and not included in this specification

(54) Kneadable bread improving additive and a method and the use thereof.

(30) Priority: **15.07.86 NL 8601850**

(43) Date of publication of application:
**17.02.88 Bulletin  88/07**

(45) Publication of the grant of the patent:
**29.01.92 Bulletin  92/05**

(84) Designated Contracting States:
**BE DE FR NL**

(56) References cited:
**BE-A- 425 198**
**FR-A- 1 108 041**
**GB-A- 897 381**

(73) Proprietor: **SONNEVELD B.V.**
**Rietgorsweg 1-3**
**NL-3356 LJ Papendrecht(NL)**

Proprietor: **Sonneveld, Gerrit Cornelis**
**Paltrokmolen 41**
**NL-3352 XE Papendrecht(NL)**

(72) Inventor: **Sonneveld, Gerrit Cornelis**
**No. 41 Paltrokmolen**
**NL-3352 XE Papendrecht(NL)**

(74) Representative: **Prins, Hendrik Willem et al**
**Octrooibureau Arnold & Siedsma Sweelinck-**
**plein, 1**
**NL-2517 GK The Hague(NL)**

Rank Xerox (UK) Business Services

## Description

The present invention relates to a kneadable bread improving additive.

Bread improving additives are employed in order to provide particular flour and meal qualities, which are dependent among other things upon the harvest, with an optimal dough and bread quality per bread type geared to the baker and consumer.

The known bread improving additives can be divided into two classes:

Class I Powders

Powder form bread improving additives contain a maximum of approximately 22% fat.

Class II Sticky pastes

a) Pastes with a fat content greater than 50% and a water content smaller than 10%

b) Pastes with a fat content greater than 30% and a water content of between 20-40% (emulsion cream) The added fats are liquid or plastic and give the end product its paste-like characteristics. What is understood by fat does not therefore include emulsifiers because they are usually in powder form, with the exception of E471.

A number of drawbacks attach to the use of both the known sticky pastes and the powder form bread improving additives, for example in relation to the choice of fats, emulsifiers and the ratio powder/fat which is dependent on processing properties, which drawbacks originate in the typical preparation methods.

The British patent specification 897.381 describes a dough bleaching product which takes the form of a paste or floury mixture. This known product is emulsified with water prior to being added to the dough. This product cannot be kneaded, because there is no question here of a product which has a lipid phase in which solid particles are absorbed.

The French patent specification 1.108.041 and the Belgian patent specification 425.198 both describe bread improving additives which contain in addition to fat a particle fraction which comprises glucose, namely dextrose, lactose and mannitol. These bread improving additives therefore do not meet the requirements of contemporary bread preparation formulas.

The invention has for its object to provide a new bread improving additive which is dough-like and kneadable, feels "dry" to the touch and is substantially without the drawbacks referred to in respect of current past-like and powder form bread improving additives, and which furthermore can, because it is kneadable, be easily and homogeneously distributed in the bread dough. This is achieved according to the invention because the kneadable bread improving additive comprises a fat fraction, a particle fraction and if necessary water, the particle fraction consisting of at least two components in particle form, which components are selected in addition to sugar from a group which comprises meal of cereals and/or of leguminous plants, gluten, starches, milk derivatives, and in which the weight ratio of the particle fraction/ added fat fraction lies between 75 : 25 and 50 : 50, and preferably between 60 : 40 and 50 : 50, and the consistency of which is substantially not dependent on temperature when this is between 5-30 degrees C. The bread improving additive according to the invention is kneadable and sliceable, hardly sticks and causes less oil discharge onto the packaging material. Furthermore the kneadable bread improving additive possesses a substantially constant consistency between 5-30 degrees C, and preferably 5-25 degrees C. It is favourable that the fat fraction has an even melting range between 5-30 degrees C.

The ratio powder fraction / fat fraction is critical because a further increase in the ratio leads to a less plastic product, and a further decrease of the ratio leads to a product that is too soft and therefore difficult to package and process. In addition the ratio is dependent on the quality of the flour to be used, which itself depends among other things on the harvest, and on the type of bread to be manufactured.

A favourable even melting range can be obtained if the fat fraction contains mono- and di-glycerides of fatty acids, preferably the emulsifier E471. Such an emulsifier has been introduced on the market by Grindsted, among others, under the trade name DIMODAN P.

Adding of lecithin (up to approximately 2%) has a favourable effect on the ratio powder fraction / fat fraction, because when lecithin is used more powder can be absorbed into the bread improving additive and this has a positive influence on consistency, particularly in the long term. A further improvement in consistency can be obtained if the fat fraction contains hard fats, such as hardened palm oil (fractions), fish oil, beef fat, milk fat.

In the bread improving additive according to the invention, meal (or flour) of soya beans, wheat, rye, peas and the like can be used as particle form component for meal of cereals and/or leguminous products.

As starches can be used corn starch, wheat starch, potato starch and the like. Appropriate milk derivatives are for example powdered milk, powdered whey, powdered buttermilk and caseinates.

The powder fraction can if required contain salt and in addition vital glutens.

The kneadability of the bread improving additive according to the invention is examined using a Farinograph from Brabender (Duisburg, FRG). A Farinograph was charged with 300 g bread improving additive, and the kneading friction at 25°C was monitored as function of time by measurement of power imput and expressed in BU (Brabender units). Paste-like bread improving additives from the classes IIa and IIb exhibited no kneading friction (0-5 BU). The bread improving additive according to the invention exhibited an initial kneading friction of 130 BU and a steady-state kneading friction of 45 BU.

The bread improving additive according to the invention has been tested for storage life. The consistency of the bread improving additive remained unchanged for at least one year at a storage temperature of 30 degrees C.

In addition no microbic activity was observed, since the bread improving additive is substantially lacking in water. After storage for approximately four months at a storage temperature of 45 degrees C there occurred no oxidization worthy of mention.

Since the kneadable bread improving additive according to the invention is kneadable and sliceable and moreover essentially does not cause greasy hands in use, it is highly suitable for use in the bakery. Its consistency furthermore makes it possible to package the bread improving additive according to the invention charge-wise depending on a particular preparation formula.

The invention further relates to a method for manufacturing the bread improving additive according to the invention and to the use of same for preparation of a particular type of bread and a package as defined in claims 11 and 12.

The following table gives a number of preparation formulas for the bread improving additive that can be used for manufacture of particular bread types with use of the bread improving additive according to the invention. Baking trials yielded good results, especially with respect to the crumb structure, crumb colour and palatability.

Table

PREPARATION FORMULA FOR DETERMINED BREAD TYPES WITH THE KNEADABLE BREAD IMPROVING ADDITIVE ACCORDING TO THE INVENTION

| Bread types Dosage Raw materials 5) | Hard bread 3 ± 1% | White bread 3 ± 1% | Milk bread 8 ± 2% | Soft roll 15 ± 3% | wholemeal bread 8 ± 2% | fruit bread 20 ± 5% |
|---|---|---|---|---|---|---|
| A. Fat fraction | | | | | | |
| 1 Oil/fat 1) | 35 ± 10 | 35 ± 10 | 35 ± 10 | 35 ± 10 | 35 ± 10 | 35 ± 10 |
| 2 mono-glycerides of fatty acids 2) | - | 5 ± 5 | 5 ± 5 | 10 ± 10 | 10 ± 10 | 10 ± 10 |
| B. Powder fraction | | | | | | |
| 3 sugars | 30 ± 20 | 30 ± 30 | 15 ± 5 | 30 ± 10 | 10 ± 5 | 40 ± 10 |
| 4 meal of cereal and/or leguminous plants 4) | 10 ± 5 | 10 ± 5 | 10 ± 5 | 10 ± 10 | 10 ± 10 | - |
| 5 vital gluten | - | 5 ± 5 | 10 ± 5 | - | 60 ± 10 | - |
| 6 starches | - | 20 ± 10 | 50 ± 15 | 20 ± 10 | 10 ± 10 | - |
| 7 milk derivatives | - | - | - | - | 10 ± 10 | 10 ± 10 |
| C. Diverse | | | | | | |
| 8 esters of mono- and di-glycerides | 20 ± 5 | 5 ± 5 | 5 ± 5 | 5 ± 3 | 10 ± 10 | 10 ± 10 |
| 9 lactilates (CSL 3)) | - | 5 ± 5 | 5 ± 5 | 10 ± 10 | 10 ± 10 | 10 ± 10 |
| 10 oxid./reduction agents, enzymes | ppm | ppm | ppm | ppm | ppm | ppm |
| 11 flavouring | - | - | - | - | - | ppm |
| 12 water (molecular) | 0 ± 10 | 0 ± 10 | 0 ± 10 | 0 ± 10 | 0 ± 10 | 0 ± 10 |
| 13 salt | 0 ± 40 | 0 ± 40 | 0 ± 40 | 0 ± 15 | 0 ± 35 | 0 ± 15 |

Note: 1) rape oil, soya oil, if required fish oil, if required palm oil, hardened palm oil, milk fat, if required small quantities phosphatides
2) E471
3) calcium stearyl lactilate (E 482)
4) soya flour, wheat flour, rye flour, pea flour
5) in % unless otherwise stated

## Claims

1. Dough like and kneadable bread improving additive comprising a fat fraction, a particle fraction and if necessary water, said particle fraction consisting of at least two components in particle form, which components are selected in addition to sugar from a group which comprises meal of cereals and/or of

4

leguminous plants, gluten, starches, milk derivatives, and in which the weight ratio of the particle fraction/ added fat fraction lies between 75 : 25 and 50 : 50, and preferably between 60 : 40 and 50 : 50, and the consistency of which is substantially not dependent on temperature when this is between 5-30 degrees C.

2. Bread improving additive as claimed in claim 1, characterized in that the fat fraction has an even melting range between 5-30 degrees C.

3. Bread improving additive as claimed in claims 1 or 2, characterized in that the fat fraction comprises E471.

4. Bread improving additive as claimed in claim 3, characterized in that the concentration of E471 amounts to 5-20% by weight of the added fat fraction.

5. Bread improving additive as claimed in claim 1-4, characterized in that the bread improving additive contains lecithin.

6. Bread improving additive as claimed in any of the foregoing claims, characterized in that the fat fraction contains hard fats, such as hardened palm oil (fractions), fish oil, beef fat, milk fat.

7. Bread improving additive as claimed in any of the foregoing claims, characterized in that the cereals and/or leguminous plants comprise soya beans, wheat, rye, peas.

8. Bread improving additive as claimed in any of the foregoing claims, characterized in that the starches comprise corn, wheat and potato starches.

9. Bread improving additive as claimed in any of the foregoing claims, characterized in that the milk derivatives comprise powdered milk, powdered whey, powdered buttermilk, caseinates.

10. Bread improving additive as claimed in any of the foregoing claims, characterized in that the bread improving additive contains salt.

11. Packaging comprising the bread improving additive as claimed in any of the claims 1-10 in a dosed quantity which is geared as a whole to a determined bread preparation formula.

12. Packaging as claimed in claim 11, characterized in that the dosed quantity is 2-40% relative to flour.

13. Method for manufacturing a bread improving additive as claimed in claims 1-10, whereby the particle fraction and the fat fraction are mixed in quantities to form a homogeneous mixture such that the weight ratio of the powder fraction / fat fraction lies between 75 : 25 and 50 : 50, and preferably between 60 : 40 and 50 : 50, and the homogeneous mixture has a consistency which is substantially not dependent on temperature when this is between 5-30 degrees C.

14. Method as claimed in claim 13, characterized in that the fat fraction has an even melting range between 5-30 degrees C.

15. The use of a bread improving additive as claimed in claims 1-10 or 13 and 14 for preparing bread, such as hard bread, white bread, brown bread, milk bread, soft rolls, wholemeal bread and/or fruit bread.

**Revendications**

1. Additif d'amélioration de la panification, sous forme de pâte pétrissable, comprenant une fraction grasse, une fraction particulaire et, si nécessaire, de l'eau, ladite fraction particulaire consistant en au moins deux composants sous forme de particules, ces composants étant choisis, en plus du sucre, parmi un groupe comprenant de la farine de céréales et/ou de plantes légumineuses, du gluten, des amidons, des dérivés du lait, et dans lequel le rapport en poids de la fraction particules/fraction grasse ajoutée est compris entre 75/25 et 50/50, et de préférence entre 60/40 et 50/50, et la consistance de l'additif étant à peu près indépendante de la température lorsque celle-ci est comprise entre 5 et 30˚C.

2.  Additif d'amélioration de la panification suivant la revendication 1, caractérisé en ce que la fraction grasse a une plage de fusion uniforme comprise entre 5 et 30˚C.

3.  Additif d'amélioration de la panification suivant les revendications 1 ou 2, caractérisé en ce que la fraction grasse comprend E471.

4.  Additif d'amélioration de la panification suivant la revendication 3, caractérisé en ce que la concentration en E471 s'élève de 5 à 20% en poids de la fraction grasse ajoutée;

5.  Additif d'amélioration de la panification suivant les revendications 1 à 4, caractérisé en ce qu'il contient de la lécithine.

6.  Additif d'amélioration de la panification suivant l'une quelconque des revendications précédentes, caractérisé en ce que la fraction grasse contient des graisses dures, telles que de l'huile de palme durcie (fractions) , de l'huile de poisson, de la graisse de boeuf, de la graisse du lait.

7.  Additif d'amélioration de la panification suivant l'une quelconque des revendications précédentes, caractérisé en ce que les céréales et/ou les plantes légumineuses comprennent les graines de soja, le blé, le seigle, les pois.

8.  Additif d'amélioration de la panification suivant l'une quelconque des revendications précédentes, caractérisé en ce que les amidons comprennent les amidons de maïs, de blé et de pommes de terre.

9.  Additif d'amélioration de la panification suivant l'une quelconque des revendications précédentes, caractérisé en ce que les dérivés du lait comprennent le lait en poudre, le petit lait en poudre, le babeurre en poudre et les caséines.

10. Additif d'amélioration de la panification suivant l'une quelconque des revendications précédentes, caractérisé en ce qu'il contient du sel.

11. Emballage de conditionnement comprenant l'additif d'amélioration de la panification tel que revendiqué dans l'une quelconque des revendications 1 à 10, en une quantité dosée qui convient, globalement, à une formule déterminée de préparation de pain.

12. Emballage suivant la revendication 11, caractérisé en ce que la quantité dosée est de 2 à 40% par rapport à la farine.

13. Procédé de fabrication d'un additif d'amélioration de la panification tel que défini suivant les revendications 1 à 10, dans lequel la fraction particules et la fraction grasse sont mélangées en quantités aptes à former un mélange homogène de manière que le rapport en poids fraction poudre/fraction grasse soit compris entre 75/25 et 50/50 et de préférence entre 60/40 et 50/50, le mélange homogène ayant une consistance qui est à peu près indépendante de la température lorsque celle-ci est comprise entre 5 et 30˚C.

14. Procédé suivant la revendication 13, caractérisé en ce que la fraction grasse a une plage de fusion uniforme comprise entre 5 et 30˚C.

15. Mise en oeuvre d'un additif d'amélioration de la panification tel que revendiqué dans les revendications 1 à 10 ou 13 et 14 pour préparer du pain, tel que du pain "dur", du pain blanc, du pain bis, du pain au lait, des "soft rolls", du pain complet et/ou du pain aux fruits.

**Patentansprüche**

1.  Teigartiges und knetbares Brotverbesserungsmittel mit einer Fettfraktion, einer Partikelfraktion und wenn nötig Wasser, wobei die Partikelfraktion aus mindestens zwei Komponenten in Partikelform besteht und die Komponenten zusätzlich zu Zucker aus einer Gruppe ausgewählt werden, die Mehl aus Getreide und/oder Hülsenfrüchten, Gluten, Stärke und Milchderivate umfaßt und wobei das Gewichtsverhältnis der Partikelfraktion/Zusatzfettfraktion zwischen 75:25 und 50:50, und Vorzugsweise zwischen 60:40 und 50:50 liegt, und dessen Konsistenz im wesentlichen nicht von der Temperatur abhängt, wenn diese zwischen 5 bis 30˚ C liegt.

2. Brotverbesserungsmittel nach Anspruch 1, dadurch **gekennzeichnet,** daß die Fettfraktion einen gleichmäßigen Schmelzbereich zwischen 5 bis 30˚ C aufweist.

3. Brotverbesserungsmittel nach Anspruch 1 oder 2, dadurch **gekennzeichnet,** daß die Fettfraktion E471 enthält.

4. Brotverbesserungsmittel nach Anspruch 3, dadurch **gekennzeichnet,** daß die Konzentration von E471 5 bis 20 Gewichts % der Zusatzfettfraktion beträgt.

5. Brotverbesserungsmittel nach den Ansprüchen 1 bis 4, dadurch **gekennzeichnet,** daß das Brotverbesserungsmittel Lecithin beinhaltet.

6. Brotverbesserungsmittel nach den Ansprüchen 1 bis 5, dadurch **gekennzeichnet,** daß die Fettfraktion harte Fette wie hartgewordenes Palmöl (Fraktionen), Fischöl, Rinderfett, Milchfett beinhaltet.

7. Brotverbesserungsmittel nach den Ansprüchen 1 bis 6, dadurch **gekennzeichnet,** daß die Getreide und/oder die Hülsenfrüchte Sojabohnen, Weizen, Roggen, Erbsen umfassen.

8. Brotverbesserungsmittel nach den Ansprüchen 1 bis 7, dadurch **gekennzeichnet,** daß die Stärke Korn-, Weizen- und Kartoffelstärke umfaßt.

9. Brotverbesserungsmittel nach den Ansprüchen 1 bis 8, dadurch **gekennzeichnet,** daß die Milchderivate Milchpulver, pulverisierte Buttermilch, pulverisierte Molke, Caseinate umfassen.

10. Brotverbesserungsmittel nach den Ansprüchen 1 bis 9, dadurch **gekennzeichnet,** daß die Brotverbesserungsmittel Salz beinhalten.

11. Verpackung umfassend das Brotverbesserungsmittel, nach den Ansprüchen 1 bis 10, in einer dosierten Menge, welche vollständig einer bestimmten Brotzubereitungsformel untergemischt wird.

12. Verpackung nach Anspruch 11, dadurch **gekennzeichnet,** daß die dosierte Menge 2 bis 40% bezüglich Mehl umfaßt.

13. Verfahren zum Herstellen des Brotverbesserungsmittels nach den Ansprüchen 1 bis 10, wobei die Partikelfraktion und die Fettfraktion in Mengen gemischt werden, um eine homogene Mischung zu bilden, so daß das Gewichtsverhältnis der Pulverfraktion/Fettfraktion zwischen 75:25 und 50:50, und vorzugsweise zwischen 60:40 und 50:50 liegt, und die homogene Mischung eine Konsistenz aufweist, die im wesentlichen nicht von der Temperatur abhängt, wenn diese zwischen 5 bis 30˚ C liegt.

14. Verfahren nach Anspruch 13, dadurch **gekennzeichnet,** daß die Fettfraktion einen gleichmäßigen Schmelzbereich zwischen 5 bis 30˚ C aufweist.

15. Verwendung des Brotverbesserungsmittels nach den Ansprüchen 1 bis 10 oder 13 und 14 zum Zubereiten von Brot wie zum Beispiel hartes Brot, Weißbrot, Schwarzbrot, Milchbrot, Brötchen, Vollkornbrot und/oder Früchtebrot.